# EUROPEAN PATENT APPLICATION

(11) **EP 4 687 008 A1**
(43) Date of publication of application: **04.02.2026**
(21) Application number: 24191753.3
(22) Date of filing: 30.07.2024
(51) Int. Cl.: G06F 1/32, G06F 1/26

(54) **POWER SAVING DEVICE**

(71) Applicant: Mains Solutions B.V., 5324 AM Ammerzoden (NL)
(72) Inventor: DEKKERS, Marius Wouterus Antonius, 5324 AM Ammerzoden (NL)
(74) Representative: Patentwerk B.V.

(57) **Abstract**

The present application concerns a power saving device. Said device comprises a passive circuit, an energy storage unit, and an active circuit. The a passive circuit is configured to identify the power saving device to a first external electronic device as a device to which power should be provided. When the power saving device is in an off-state, connecting the first external electronic device to the power saving device, connects the first external electronic device to the passive circuit. The energy storage unit is configured to receive power from the first external electronic device. The active circuit is configured to receive power from the energy storage unit and comprises a controller. The controller is configured to control an electrically controllable switch, such as a relay, to provide power to a second external electronic device and to disconnect the passive circuit from the first external electronic device.

## Description

The application concerns a power saving device and a power saving system including such a device and an electrically controllable power distribution unit. The application further concerns a method for saving power, using a power saving device or a power saving system.

Electrically controllable power distribution units (PDU's), sometimes called power strips, are known from the art. They comprise a power plug that can be connected to a wall outlet and one or more sockets, each of which can itself receive a further power plug. Such PDU's further comprise an electrically controllable switch, such as a relay, that controls the electrical connection between the power plug and the one or more sockets, and communication means via which it can receive control signals for controlling said switch.

In practise, users are notoriously inconsistent in turning (peripheral) electronic devices off. Lights, printers, screens and televisions are left on when users stop using them and/or leave their surroundings. While various other ways have been developed to save energy, such as stand-by modes, a consistent way to save energy is to just stop providing power to these peripherals all together.

Electronically controllable PDU's may be used in workspaces where electronic devices are installed that are not continuously in use. Such devices may include all kinds of accessories and peripherals. By not providing any power to its sockets at all, such PDU's save energy more consistently. The mentioned control signal can be provided by a control device, which is assumed to reflect presence of a user.

However, even then energy may still be wasted.

The control device may be a desktop computer. A user then still has to turn off this computer when they are done working and/or leave for the day. Otherwise, the PDU will keep providing power to the peripheral devices - even if said peripheral devices eventually go into some sort of stand-by mode.

The control device may be a docking station, such as a display integrated docking station. Such docking stations generally go in a stand-by mode when no laptop is connected thereto. However, in practise these docking stations do not behave predictably enough to reliable determine whether a laptop is connected and to then assume that a user is present. The applicant finds that, even though producers state that their product follows various international standards, that many products still exhibit unpredictable and/or poorly defined behaviour. As a consequence, relying on docking stations themselves to indicate whether peripheral devices should receive power or not, is not a reliable solution. The behaviour of docking stations may cause peripheral devices to stay on when not necessary and thus waste power.

It is an object of the invention to provide a device in which at least some of the abovementioned disadvantages are at least less prevalent.

It is a further object of the invention to provide a device that reliably predicts whether an external electronic device is connected or not.

It is a further object of the invention to provide a device that assists in saving energy.

Such a device is provided in a power saving device according to claim 1. Said power saving device comprises:
- a passive circuit, configured to identify the power saving device to a first external electronic device as a device to which power should be provided.
   when the power saving device is in an off-state, connecting the first external electronic device to the power saving device, connects the first external electronic device to the passive circuit.
- an energy storage unit, configured to receive power from the first external electronic device.
- an active circuit configured to receive power from the energy storage unit and comprising a controller, wherein said controller is configured to control an electrically controllable switch, such as a relay, to provide power to a second external electronic device disconnect the passive circuit from the first external electronic device.

The power saving device of claim 1 is capable of turning on the second external electronic device without the use of any kind of long-term energy storage. It is therefore cheaper and more environmentally friendly to produce. The power saving device of claim 1 also does not have to be in a stand-by state. Power can be completely and/or 100% removed. The power saving device 1 does not have to be connected to a wall outlet. The power saving device of claim 1 therefore assist a user in saving power more effectively than what is achieved in the prior art.

To reduce the number of connections necessary in the first external electronic device, the connection to the power saving device may be reused once power is provided to the second external electronic device. Therefore, in a preferred embodiment, when the power saving device is in an on-state, connecting the first external electronic device and the second external electronic device to the power saving device, connects the first external electronic device and the second external electronic device to each other.

The skilled person will appreciate that these connections can be achieved in a number of ways. In a preferred embodiment, the power saving device further comprising a first connector, configured to be connected to the first external electronic device, such as to a complementary connector of the first external electronic device. In a preferred embodiment, the power saving device further comprising a second connector, internally connected to the first connector and configured to be connected to the second external electric device, preferably to a complementary connector of the second external electronic device.

For power saving devices that comprise both this first and second connector, embodiments are conceivable in which the first connector and the second connector are complementary connectors, in which the first connector is a male connector and the second connector is a female connector, or vice-versa, or in which the first connector is a plug and the second connector is a receptacle, or vice-versa.

The skilled person will appreciate that various types of hardware may be used. Examples include that the first connector and/or the second connector are a USB-type connector, such as a USB type-a, USB type-b, or USB Type-C connector. Relying on these international standards provides a power saving device that is compatible with many other devices.

The power saving device may assist in saving energy when, for example, the first external electronic device is a smartphone, tablet or laptop, and/or when the second external electronic device is a docking station, such as a display-integrated docking station.

While many types of energy storage are considered long term or even treated as permanent, the skilled person is aware of the fact that they are often not. Batteries still lose energy over time and if voltages become to low, devices operating based thereon will still not be functional. Batteries should be avoided therefore. In a preferred embodiment, the energy storage unit comprises one or more capacitors, preferably supercapacitors, ultracapacitors, electrolytic capacitors, or a combination thereof.

Apart from the first external electronic device, anticipating a scenario in which the first and second electronic devices switch roles, the second electronic device may provide power as well. Therefore preferably the energy storage unit is further configured to receive power from the second external electronic device.

To avoid alternately charging and discharging the energy storage unit 12, even when power is readily provided, the active circuit is preferably further configured to receive power from the first and/or the second external electronic device.

Embodiments are conceivable in which the features of a PDU are integrally provided with the power saving device. In such embodiments, the power saving device further comprises:
- a power plug configured to connect to a wall outlet.
- one or more sockets, configured to receive a further power plug of the second external electronic device.
- the electrically controllable switch.

The switch is configured to control the electrical connection between the power plug and the one or more sockets.

Alternatively, the power saving device may collaborate with an external electronically controllable power distribution unit. In such embodiments, the power saving device further comprises communication means configured to connect the active circuit to an external electrically controllable power distribution unit that comprises complementary communication means, a power plug configured to connect to a wall outlet, one or more sockets configured to receive a further power plug of the second external electronic device, and the electrically controllable switch configured to control the electrical connection between the power plug and the one or more sockets. The communication means of the power saving device may include a third connector, preferably a USB-type connector, such as a USB Type-A, USB Type-B, or USB Type-C connector.

This latter embodiment of the power saving device may be comprised by a power saving system according to the invention. Said system further includes electrically controllable power distribution unit that itself comprises communication means complementary to the communication means comprised by the Power saving device, a power plug configured to connect to a wall outlet, one or more sockets configured to receive a further power plug of the second external electronic device, and the electrically controllable switch, configured to control the electrical connection between the plug and the one or more sockets.

The abovementioned objects are also at least partially achieved in a method for saving energy, preferably using one of the abovementioned power saving device or one of the abovementioned power saving system The method comprising:
- connecting, when the power saving device is in an off-state, a first external electronic device to the power saving device, identifying the Power saving device to the first external electronic device as a device to which power should be provided;
- providing power from the first external electronic device to the power saving device;
   storing, in the energy storage unit, energy received as power from the first external electronic device;
- using the controller, controlling an electrically controllable switch to provide power to a second external electronic device and disconnecting the passive circuit from the first external electronic device.

Further embodiments according to the invention will be elucidated further in relation to the accompanying figures, in which:
figure 1 shows a workplace, including a power saving device according to the invention;
figure 2 shows a flowchart of a method for saving power according to the invention.

The following description may introduce and/or rely on terminology that is found in and/or originates from specific hardware specifications and/or communication protocols. However, the skilled person will appreciate that the invention should not be considered limited to any one specific type of hardware, nor to any one specific communication protocol. Instead, it can be achieved with various kinds and all should be considered as falling within the scope of the application. Use of terminology found in and/or originating from specific hardware specifications and/or communication protocols should not be construed as limited to the application.

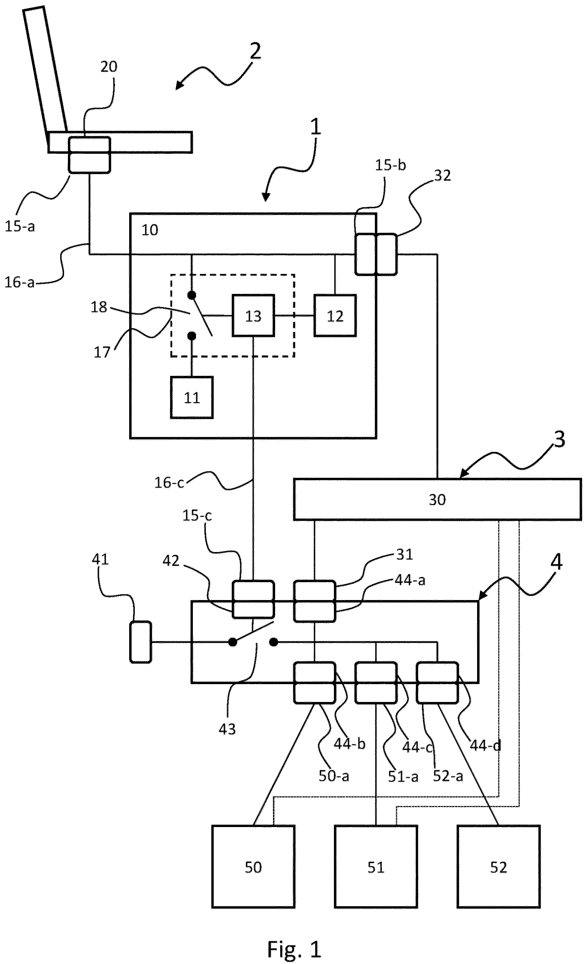

Referring to figure 1, shown is a workplace in which a power saving device 1 according to the invention may be deployed. The workplace further includes a laptop 2, a docking station 3, an electronically controllable power distribution unit (PDU) 4, and three peripheral electronic devices 50, 51, and 52.

People use laptops for a number of reasons. They may be easier to carry around than desktop computers and allow a user to work almost anywhere. Laptops may also be used, as is done in some modern offices, to ensure that employee have their own device but are not limited to one workspace. However, in practice, laptop users still have workplaces where they work for extended amounts of time. For example, for a day. When doing so, users appreciate the use of various peripheral devices in addition to the laptop. Figure 1 shows three peripheral devices but any number may be present in a workplace. Examples of such peripheral devices are additional screens, scanners, printers, desk lamps and electronically adjustable desks. In the schematic representation in figure 1, such devices are exemplified by peripheral device 50, 51, and 52, each of which comprises a power plug 50-a, 51-a, 52-a.

In the context of this application, the term power plug refers to a plug that may be connected with a socket and via which connection power may be provided. A power plug may, for example, be connected to a wall outlet.

The workspace shown in figure 1 specifically relies on a power saving system including the power saving device 1 and PDU 4.

When the power saving device 1 is turned off (or, alternatively said, inactive or in an off-state), active circuit 17 does not operate. Default-closed switch 18 connects plug 15a to passive circuit 11. Controller 13 is inactive. No energy is stored in energy storage unit 12. Consequently, default-open relay 43 does not connect plug 41 with the sockets 44a-d, so docking station 3 and peripheral devices 50, 51, 52 are also turned off. Docking station 3 is connected, via its docking plug 32, to the receptable 15-b of power saving device 1. Docking stations may disable their docking plug 32 when turned off. Therefore the connection between docking station 3 and power saving device 1 does not necessarily interfere with the interaction between laptop 2 and power saving device 1 that will be elucidated further in this description.

When plug 15-a is connected to receptacle 20 of laptop 2, laptop 2 is connected to passive circuit 11.

This passive circuit 11 identifies the power saving device 1 as a peripheral device (or 'device' for short), triggering the laptop to perform the role of a host. As host, laptop 2 provides power to power saving device 1. (Similar technology is sometimes referred to as master-slave.)

Embodiments are conceivable in which the connection between laptop 2 and power saving device 1 is a USB Type-C connection. In such embodiments, passive circuit 11 may comprise one or more resistors, such as 5k1 ohm resistors, connecting either one or both of the CC-pin and the VCON-pin of the plug 15a to ground. This may trigger the laptop to act as a host. The skilled person will appreciate that any combination of hardware and communication protocol may be used that allows for a passive circuit 11 to identify power saving device 1 to external devices as being a device to which power should be provided.

The provided power is stored, as energy, in energy storage unit 12, which may comprise one or more capacitors. The capacitors may be of the same, or of different types. The possible types include supercapacitors, ultracapacitors, or electrolytic capacitors. Energy storage unit 12 does not require, and preferably does not include any kind of battery. Energy storage unit 12 does not require and preferably does not include any kind of long term energy storage.

When power is provided by laptop 2, controller 13 may activate. Power saving device 1 may be said to enter a start-up state.

Controller 13 may control relay 42 by sending a control signal to PDU 4. Power is then provided from plug 41 to socket 44a and, via plug 31, to docking station 3. Docking station 3 may then also turn on. (Alternatively said, docking station 3 may be said to enter a start-up state.)

Controller 13 may disconnect passive circuit 11 from laptop 2 by opening default-closed switch 18. Laptop 2 then stops providing power to power saving device 1. When laptop 2 stops providing power to power saving device 1, controller 13 may continue to operate using the energy stored in the energy storage unit 12.

Power saving device 1 may then be said to be turned on (or, alternatively said, active or in an on-state).

In a regular scenario, docking station 3 may enable its docking plug 32 and, via power saving device 1, connect to laptop 2. Because controller 13 keeps passive circuit 11 disconnected from plug 15-a and receptacle 15-b, the power saving device 1 effectively becomes invisible to docking station 3 and laptop 2. Between docking station 3 and laptop 2, regular communication may occur. Such communication may include any number of combination of handshakes, host/device negotiations, power negotiations, etc. Docking station 3 and laptop 2 are able to connect normally, even though power was initially removed from docking station 3 completely.

Power saving device 1 is able to turn on docking station 3 (and the peripheral devices 50, 51, 52) without any kind of long-term energy storage, nor does it have to be in any type of stand-by state. The power saving device 1 does not have to be connected to a wall outlet, nor does it have to store any amount of power over extended periods of time (e.g. days, years, etc.). Use of this power saving device 1 therefore saves more energy than what can be achieved using merely docking stations known from the art.

Scenarios are conceivable in which the docking station 3 takes over the role of the host and the laptop switches to the role of the peripheral device. Apart from laptops, other devices capable of performing the role of host and device may be used as first external electronic device. Examples include tablets and smartphones. Apart from docking stations, other host-capable devices may be used as second external electronic devices. For example, screen-integrated docking stations may be used.

Controller 13, after passive circuit 11 is disconnected, may continue to operate using the energy stored in energy storing unit 12. Preferably, controller 13 and/or energy storage unit 12 can both receive power from docking station 3 as well. Controller 13 may then continue to operate using the power provided by docking station 3. In some embodiments, energy storage unit 12 may also receive power from docking station 3. In the embodiment shown in figure 1, the energy storage unit 12 is connected to receptacle 15b via which docking station 3 provides power to laptop 2. Embodiments are also conceivable in which controller 13 is directly connected to receptacle 15b.

In a preferred embodiment, power saving device 1 includes means for ensuring that a sufficient amount of energy is stored in energy storage unit 12 before disconnecting passive circuit 11 from laptop 2 and starting the period of time in which power saving device 1 has to operate on energy stored in the energy storage unit 12 alone. In some embodiments, controller 13 waits a predetermined amount of time after being activated. This gives the energy storage unit 12 some more time to receive power and store energy. In other embodiments, controller 13 monitors the amount of energy stored in energy storage unit 12 actively - for example by measuring a voltage of the energy storage unit 12 - and disconnects passive circuit 11 when the amount of energy stored crosses a predetermined threshold.

How long docking station 3 takes to turn on and, more specifically, enable docking port 32, depends on things like its brand, make, and model. How long docking station 3 and laptop 2 take to negotiate their roles, further depends on aspects such as both their brands, makes, and models.

In a preferred embodiment, controller 13, after activating, waits for a first period of time before controlling relay 43 and then waits for a second period of time before disconnecting passive circuit 11. These steps may also be performed in a different order. The first period of time may be between 1 and 3 seconds and is preferably around 2 seconds. The second period of time may be between 0.5 seconds and is preferably around 2 seconds.

In a preferred embodiment, the power saving device 1 comprise a LED indicator, or any other type of indicator, for that matter, to inform a user of the state that it is in. The LED indicator may change colour depending on which of the abovementioned steps has been performed, depending on how much energy is stored in the energy storage unit 12, or depending on any other internal state of the power saving device 1.

Preferably, controller 13, after disconnecting passive circuit 11, continues to operate using energy stored in energy storage unit 12 for a third period of time, being between 5 and 30 seconds, preferably between 10 and 25 seconds, more preferably being around 20 seconds.

Not all peripheral devices for which power may be saved using device 1 are peripheral devices coupled to docking station 3. For example, peripheral device 52 is not. Examples thereof are desk lamps and electronically adjustable desks.

When laptop 2 is disconnected from connector 15-a, docking station 3 will consider it 'undocked' and itself stop providing power. Controller 13

In a preferred embodiment, controller 13 continues to operate using energy stored in energy storage unit 12 for at least some time. For example, for five seconds. If a user then accidentally undocks their laptop, the PDU and docking station 3 does not immediately turn off, improving user convenience.

In a preferred embodiment, controller 13 monitors this connection and when it is determined that laptop 2 was disconnected and power is no longer provided by docking station 2, controls relay 43 to disconnect plug 41 from the sockets 44a-d.. In a preferred embodiment, if, after disconnecting the passive circuit, energy storage unit 12 runs out of energy, controller 13 deactivates. Default-closed switch 18 then again connects passive circuit 11 to plug 15-a and the power saving device returns to the aforementioned off-state.

The workplace shown in figure 1 is provided with a power saving system according to the invention including the power saving device 1 and the PDU 4. In this embodiment of power saving device 1, it further comprises a cable 16-c and connector 15-c to connect to PDU 4. Said PDU, in turn, comprises a receptacle 42 via which relay 43 may be controller. Other compatible communication means between power saving device 1 and PDU 4 may be used as well.

Embodiments are also conceivable in which the power saving device and the PDU are completely integrated. In such embodiments, the components now attributed to the PDU, such as plug 41, relay 43, and sockets 44a-d, would them be comprised by the power saving device. The abovementioned communication means would then not be necessary. Instead the components would be connected using regular integrated connections such as wires or via printed circuit boards.

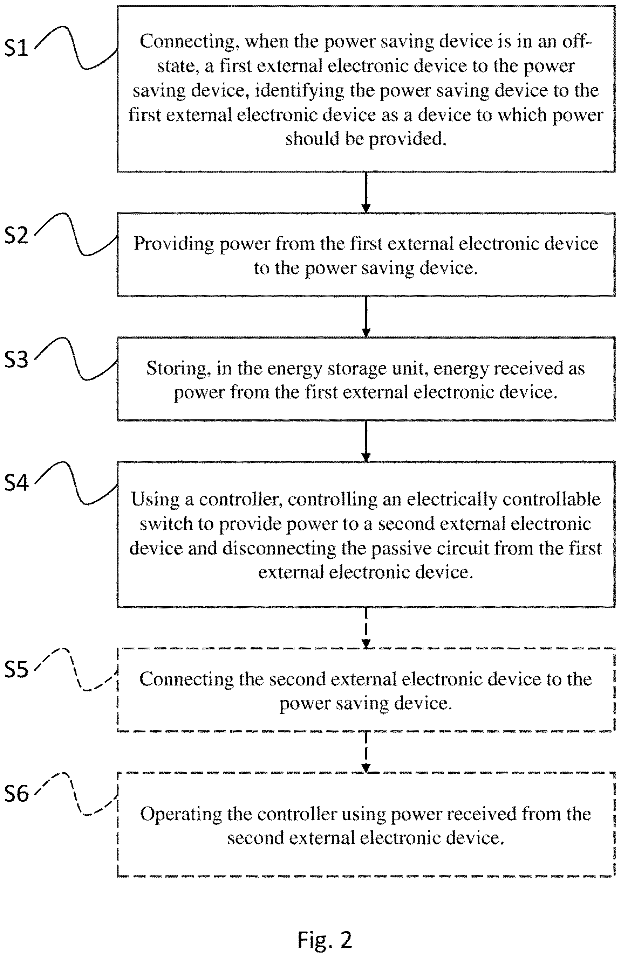

Referring to figure 2, shown is a flowchart of a method for saving power according to the invention. This method may be performed using any one of the abovementioned embodiments of the power saving device. This method may also be performed using any one of the abovementioned embodiments of the power saving system. Alternatively or in addition, the method may be performed in any one of the abovementioned workspaces.

In step 1, a first external electronic device is connected to the power saving device. When the power saving device is in an off-state, the power saving device is identified to the first external electronic device as a device to which power should be provided.

In step 2, the first external electronic device provides power to the power saving device.

In step 3, the power received from the first external electronic device is stored as energy in the energy storage unit.

In step 4, a controller controls an electrically controllable switch to provide power to a second external electronic device and disconnects the passive circuit from the first external electronic device.

In a preferred embodiment, the method continues. An a possible further step 5, the second external electronic device is connected to the power saving device. An a possible further step 6, the controller operates using power received from the second external electronic device.

## Claims

1. Power saving device, comprising:
a passive circuit, configured to identify the power saving device to a first external electronic device as a device to which power should be provided;
wherein, when the power saving device is in an off-state, connecting the first external electronic device to the power saving device, connects the first external electronic device to the passive circuit;
an energy storage unit, configured to receive power from the first external electronic device;
an active circuit configured to receive power from the energy storage unit and comprising a controller, wherein said controller is configured to:
control an electrically controllable switch, such as a relay, to provide power to a second external electronic device;
disconnect the passive circuit from the first external electronic device.

2. Device according to claim 1, wherein, when the power saving device is in an on-state, connecting the first external electronic device and the second external electronic device to the power saving device, connects the first external electronic device and the second external electronic device to each other.

3. Device according to claim 1 or 2, further comprising a first connector, configured to be connected to the first external electronic device, preferably to a complementary connector of the first external electronic device.

4. Device according to claim 3, further comprising a second connector, internally connected to the first connector and configured to be connected to the second external electric device, preferably to a complementary connector of the second external electronic device.

5. Device according to claim 4, wherein the first connector and the second connector are complementary connectors, such as the first connector being a male connector and the second connector being a female connector or vice-versa, or such as the first connector being a plug and the second connector being a receptacle, or vice-versa.

6. Device according to claim 4 or 5, wherein the first connector and/or the second connector are a USB-type connector, such as a USB type-a, USB type-b, or USB Type-C connector.

7. Device according to any one of the preceding claims, wherein the first external electronic device is a smartphone, tablet or laptop; and/or wherein the second external electronic device is a docking station, such as a display-integrated docking station.

8. Device according to any one of the preceding claims, wherein the energy storage unit comprises one or more capacitors, preferably supercapacitors, ultracapacitors, electrolytic capacitors, or a combination thereof.

9. Device according to any one of the preceding claims, wherein the energy storage unit is further configured to receive power from the second external electronic device.

10. Device according to any one of the preceding claims, wherein the active circuit is further configured to receive power from the first and/or the second external electronic device.

11. Device according to any one of the preceding claims, further comprising:
a power plug configured to connect to a wall outlet;
one or more sockets, configured to receive a further power plug of the second external electronic device;
the electrically controllable switch,
wherein said switch is configured to control the electrical connection between the power plug and the one or more sockets.

12. Device according to any one of the claims 1-10, further comprising communication means configured to connect the active circuit to an external electrically controllable power distribution unit that comprises complementary communication means, a power plug configured to connect to a wall outlet, one or more sockets configured to receive a further power plug of the second external electronic device, and the electrically controllable switch configured to control the electrical connection between the power plug and the one or more sockets.

13. Device according to claim 12, wherein the connection means comprise a third connector, preferably a USB-type connector, such as a USB Type-A, USB Type-B, or USB Type-C connector.

14. A power saving system comprising the power saving device according to claim 12 or 13, and an electrically controllable power distribution unit;
wherein the electrically controllable power distribution unit comprises:
communication means complementary to the communication means comprised by the Power saving device;
a power plug configured to connect to a wall outlet,
one or more sockets, configured to receive a further power plug of the second external electronic device, and
the electrically controllable switch, configured to control the electrical connection between the plug and the one or more sockets.

15. Method for saving energy using a power saving device according to any of the claims 1-13 or a power saving system according to claim 14, the method comprising:
connecting, when the Power saving device is in an off-state, a first external electronic device to the Power saving device, identifying the Power saving device to the first external electronic device as a device to which power should be provided;
providing power from the first external electronic device to the Power saving device;
storing, in the energy storage unit, energy received as power from the first external electronic device;
using the controller, controlling an electrically controllable switch to provide power to a second external electronic device and disconnecting the passive circuit from the first external electronic device.

## Amended claims

### Amended claims in accordance with Rule 137(2) EPC.

1. Power saving device (1), comprising:
a passive circuit (11), configured to identify the power saving device to a first external electronic device as a device to which power should be provided;
wherein, when the power saving device (1) is in an off-state, connecting the first external electronic device to the power saving device, connects the first external electronic device to the passive circuit (11);
an energy storage unit (12), configured to receive power from the first external electronic device;
an active circuit configured to receive power from the energy storage unit (12) and comprising a controller (13), wherein said controller (13) is configured to:
control an electrically controllable switch, such as a relay, to provide power to a second external electronic device;
disconnect the passive circuit (11) from the first external electronic device;
wherein the first external electronic device is a smartphone, tablet or laptop and/or wherein the second external electronic device is a docking station.

2. Device (1) according to claim 1, wherein, when the power saving device (1) is in an on-state, connecting the first external electronic device and the second external electronic device to the power saving device (1), connects the first external electronic device and the second external electronic device to each other.

3. Device (1) according to claim 1 or 2, further comprising a first connector, configured to be connected to the first external electronic device, preferably to a complementary connector of the first external electronic device.

4. Device (1) according to claim 3, further comprising a second connector, internally connected to the first connector and configured to be connected to the second external electric device, preferably to a complementary connector of the second external electronic device.

5. Device (1) according to claim 4, wherein the first connector and the second connector are complementary connectors, such as the first connector being a male connector and the second connector being a female connector or vice-versa, or such as the first connector being a plug and the second connector being a receptacle, or vice-versa.

6. Device (1) according to claim 4 or 5, wherein the first connector and/or the second connector are a USB-type connector, such as a USB type-a, USB type-b, or USB Type-C connector.

7. Device (1) according to any one of the preceding claims, wherein the second external electronic device is a display-integrated docking station.

8. Device (1) according to any one of the preceding claims, wherein the energy storage unit (12) comprises one or more capacitors, preferably supercapacitors, ultracapacitors, electrolytic capacitors, or a combination thereof.

9. Device (1) according to any one of the preceding claims, wherein the energy storage unit (12) is further configured to receive power from the second external electronic device.

10. Device (1) according to any one of the preceding claims, wherein the active circuit is further configured to receive power from the first and/or the second external electronic device.

11. Device (1) according to any one of the preceding claims, further comprising:
a power plug configured to connect to a wall outlet;
one or more sockets, configured to receive a further power plug of the second external electronic device;
the electrically controllable switch,
wherein said switch is configured to control the electrical connection between the power plug and the one or more sockets.

12. Device (1) according to any one of the claims 1-10, further comprising communication means configured to connect the active circuit to an external electrically controllable power distribution unit that comprises complementary communication means, a power plug configured to connect to a wall outlet, one or more sockets configured to receive a further power plug of the second external electronic device, and the electrically controllable switch configured to control the electrical connection between the power plug and the one or more sockets.

13. Device (1) according to claim 12, wherein the connection means comprise a third connector, preferably a USB-type connector, such as a USB Type-A, USB Type-B, or USB Type-C connector.

14. A power saving system comprising the power saving device (1) according to claim 12 or 13, and an electrically controllable power distribution unit;
wherein the electrically controllable power distribution unit comprises:
communication means complementary to the communication means comprised by the power saving device (1);
a power plug configured to connect to a wall outlet,
one or more sockets, configured to receive a further power plug of the second external electronic device, and
the electrically controllable switch, configured to control the electrical connection between the plug and the one or more sockets.

15. Method for saving energy using a power saving device according to any of the claims 1-13 or a power saving system according to claim 14, the method comprising:
connecting (S1), when the power saving device is in an off-state, a first external electronic device to the power saving device, identifying the power saving device to the first external electronic device as a device to which power should be provided;
providing (S2) power from the first external electronic device to the power saving device;
storing (S3), in the energy storage unit, energy received as power from the first external electronic device;
using the controller, controlling (S4) an electrically controllable switch to provide power to a second external electronic device and disconnecting the passive circuit from the first external electronic device;
wherein the first external electronic device is a smartphone, tablet or laptop and/or wherein the second external electronic device is a docking station.
